# EUROPEAN PATENT SPECIFICATION

(11) **EP 1 873 212 B1**
(45) Date of publication and mention of the grant of the patent: **15.10.2008**
(21) Application number: 05735154.6
(22) Date of filing: 12.04.2005
(51) Int. Cl.: C08L 95/00

(54) **METHOD FOR MODIFYING BITUMEN**
VERFAHREN ZUR MODIFIZIERUNG VON BITUMEN
PROCEDE DESTINE A MODIFIER DU BITUME

(43) Date of publication of application: 02.01.2008
(73) Proprietor: Dannert, Dieter, Torrelodones, 28250 Madrid (ES)
(72) Inventor: Dannert, Dieter, Torrelodones, 28250 Madrid (ES)
(74) Representative: Elzaburu Marquez, Alberto
(86) International application number: PCT/ES2005/070040
(87) International publication number: WO 2006/108887

(56) References cited:
- WO-A1-99/27018
- ES-T3- 2 048 212
- ES-T3- 2 119 159
- US-A- 5 385 401
- US-A- 5 683 498

## Description

### Field of the Invention

The present invention relates to a process for modifying bitumens used for manufacturing asphalt agglomerates and for manufacturing products used in construction for waterproofing and joint sealing purposes and the like.

More specifically, the invention relates to a process for modifying bitumens with a waste rubber product granulate or powder, especially coming from automobile tires, which can be satisfactorily used to manufacture asphalt agglomerates intended for the construction of roads, highways, freeways, urban roads etc., as well as for the manufacture of membranes, sheets, waterproofing, sealants for fissures, cracks and joints, emulsions and the like.

### Background of the Invention

The persons skilled in the art generally know about integrating thermoplastic materials and elastomers in bitumen, according to what is known as "bitumen modification" and which forms a well known technique in road construction, intended to improve a series of characteristics of the asphalt agglomerate.

Some proposals for modifying bitumen with waste rubber powder are known which on one hand have the purpose of contributing to solving the environmental problem derived from the enormous surplus of used tires, and on the other hand intend to transmit a series of qualities of the rubber powder to the road, such as carbon black, providing resistance to ultraviolet influence, antioxidants, antiozonants, sulfur, providing tensile strength, and naturally, natural rubber and synthetic rubber, thus increasing elasticity and adhesiveness.

Some attempts to integrate tire powder or granulate in the agglomerate, either by means of the "dry" system, i.e. adding the powder to the aggregates, or by means of the "wet" system, i.e. integrating the powder in the bitumen, have not gone beyond laboratory testing.

In the specific case of the "wet" system, the most difficult obstacle that must be overcome in the mixture of the rubber powder with bitumen is the long time required by this mixture until the chemical reaction between the bitumen and the rubber powder occurs, also known intentionally as "digestion time", usually ranging between 60 and 90 minutes and several days in some processes and whereby the bitumen has specifications allowing to consider it as modified. In order to reach a reasonable production, this long process requires the use of large tanks and installations which naturally need space in agglomerate plants. The energy consumption is also considerable. These circumstances have considerably limited this modification to very low levels up until now.

### Summary of the Invention

The present invention is aimed at solving the mentioned problems by providing a process for modifying bitumen with rubber powder achieving the intended result in a time that is much lower than that of the known processes.

As is well known, the process for modifying bitumen with rubber powder involves an increase of its hardness (i.e. a decrease in penetration) and of its softening point. According to the known technique, this process is carried out by mixing both materials with stirring or by means of a mill at temperatures of 190/200°C during which the rubber powder particles absorb part of the aromatic oil contained in the bitumen and become "swollen", recovering rubber properties with this absorption. In turn, the bitumen penetration decreases due to the loss of aromatic oil. This process is considered to have ended when the increase of hardness and of the softening point has stopped, which requires more than one hour of process time.

Apart from the long process time, a drawback of this technique is the difficulty in controlling the specifications of the modified bitumen. It is known that the addition of less than 3% of rubber powder does not cause any effect and that the addition of more than 30% produces a useless modified bitumen, but up until now, the control of all the variables of the process to predetermine the specifications of the modified bitumen has not been satisfactorily achieved.

In this context, the inventor has surprisingly found a process for modifying bitumen with rubber powder from vehicle tires or other industrial rubber product wastes, essentially comprising the following steps:
a) mixing rubber powder with an aromatic oil in a proportion comprised between 98-60% of rubber powder and 2-40% of aromatic oil at room temperature until obtaining a homogeneous mixture;
b) mixing the rubber powder resulting from the previous step with bitumen, with stirring or by means of a mill or another mixing element in a proportion comprised between 5-20% of modified rubber powder and 95-80% of bitumen, at a temperature comprised between 140 and 200°C for a time comprised between 5 and 40 minutes.

The following advantages are achieved by means of this process:
- The mixing time of the bitumen and rubber powder is reduced to 5-40 minutes.
- The working temperature for the mixture of bitumen and rubber powder is reduced from 190/200°C to 140/200°C with the subsequent cost reduction.
- The size of the mixing installation is reduced, less surface area being occupied in the agglomerate plant as a result of simplifying the process of mixing the bitumen with the rubber powder.

It is estimated that the indicated advantages come from the mixture of bitumen with rubber powder, the particles of which are "swollen" as a result of the addition of aromatic oil in the firs step of the process, which translates into a lower absorption of the aromatic oil contained in the bitumen during the second step of the process, and subsequently a lower penetration reduction. The penetration reduction is proportional to the amount of aromatic oil added to the rubber powder during the first step which allows controlling the specifications of the modified bitumen.

The elimination of the long reaction or "digestion" times of the mixture of bitumen with rubber powder and the use of much more reduced temperatures not only involves an important cost decrease but also a substantial reduction of harmful emissions, which is sought according to the Kyoto protocol.

Other features and advantages of the present invention will be understood from the following detailed description of an embodiment thereof.

### Detailed Description of the Invention

The first step of the process according to the invention is to add aromatic oil in a proportion comprised between 2 and 40%, and preferably between 3 and 25%, to the rubber powder before it is mixed with the bitumen.

For the purposes of this invention, aromatic oil is understood as a process oil with a high aromatic compound content obtained from petroleum refining. Aromatic oils with a high polycyclic aromatic (denominated PCA) content and oils with a polycyclic aromatic content of less than 3% can be distinguished according to their origin, which can be heavy bases or light or medium bases, and their refining degree. The former oils have a certain degree of toxicity and therefore need special handling to comply with the corresponding safety, hygiene and environmental rules. The latter oils are not hazardous.

Both oils are useful for the purposes of the present invention, although the latter oils are preferably used. The following table indicates the specifications of aromatic oils with low polycyclic content.

| **Technical characteristics** | **Method** | **Test** | **Unit** | **Value** |
|---|---|---|---|---|
| Appearance | Visual | | | Dark brown |
| Relative density 15°C | ASTM | D4052 | kg/m3 | 950 |
| Kinematic viscosity 40°C | ASTM | D445 | mm2/s | 410 |
| Kinematic viscosity 100°C | ASTM | D445 | mm2/s | 19 |
| Flash point | ASTM | D92 | °C | 270 |
| Pour point | ASTM | D97 | °C | +27 |
| Refractive index nD 20°C | ASTM | D1218 | | 1.528 |
| Sulfur content | ASTM | D4294 | M% | 1.0 |
| Carbon distribution | ASTM | D2140 | | |
| AC | ASTM | | M% | 25 |
| NC | ASTM | | M% | 30 |
| PC | ASTM | | M% | 45 |
| Neutralization value | ASTM | D974 | mg/KOH/g | 0.6 |
| Aniline point | ASTM | D611 | °C | 68 |

The operation for mixing the rubber powder with the aromatic oil can be carried out in a centralized area with suitable machinery for this purpose. The rubber powder mixed with the aromatic oil, in a proportion comprised between 2% and 40% and preferably between 3% and 25%, is stored until its subsequent use in agglomerate plants, where it is mixed with bitumen at a temperature comprised between 140°C and 200°C and preferably between 150°C and 170°C for a time comprised between 5 and 40 minutes and preferably between 12 and 15 minutes, without adding reaction or "digestion" times.

The mixing equipment can be small therefore it does not require a considerable surface area in the agglomerate plant and does not hinder its operation.

Several specific examples for carrying out the process are described below.

### EXAMPLE 1

A bitumen with the following specifications is modified. Penetration: 98 dmm; Ring and Ball: 49°C.

The bitumen is mixed for 15 minutes at 170°C, with stirring, with 15% of rubber powder containing 5% of aromatic oil.

The specifications of the resulting modified bitumen are the following. Penetration: 62 dmm; Ring and Ball: 58°C.

### EXAMPLE 2

A bitumen with the same specifications as the previous example is modified.

The bitumen is mixed for 15 minutes at 170°C, with stirring, with 15% of rubber powder containing 20% of aromatic oil.

The specifications of the resulting modified bitumen are the following. Penetration: 72 dmm; Ring and Ball: 53°C.

### EXAMPLE 3

A bitumen with the following specifications is modified. Penetration: 40 dmm; Ring and Ball: 55°C.

The bitumen is mixed for 15 minutes at 170°C, with stirring, with 15% of rubber powder containing 5% of aromatic oil.

The specifications of the resulting modified bitumen are the following. Penetration: 20 dmm; Ring and Ball: 65°C.

### EXAMPLE 4

A bitumen with the same specifications as the previous example is modified.

The bitumen is mixed for 15 minutes at 170°C, with stirring, with 15% of rubber powder containing 20% of aromatic oil.

The specifications of the resulting modified bitumen are the following. Penetration: 28 dmm; Ring and Ball: 61°C.

It is clearly inferred from the previous examples that there is a considerably proportional relation ship between the increase of the hardness and the softening point of the modified bitumen and the amount of aromatic oil added to the rubber powder in the first step of the process.

Different amounts of aromatic oil (5% and 20%) have been used in the mentioned examples but the person skilled in the art will understand that other amounts can be used to obtain a modified bitumen with certain penetration and ring and ball specifications, facilitating the change in the specifications of the modified bitumen which can be required for the same job for different sections.

This possibility of controlling the specifications of the bitumen modified with rubber powder entails an important additional advantage of the process.

In addition to the possibility of determining the specifications of the modified binder through the aromatic oil content in the powder, there is a means for doing so by means of the use of different percentages of rubber powder. If the rubber powder content was 15% in the previous examples, an increase of this percentage also involves an improvement of the quality of the modified bitumen as shown in the following example.

### EXAMPLE 5

A bitumen with the following specifications is modified. Penetration: 98 dmm; Ring and Ball: 49°C.

The bitumen is mixed for 15 minutes at 170°C, with stirring, with 20% of rubber powder containing 5% of aromatic oil.

The specifications of the resulting modified bitumen are the following. Penetration: 62 dmm; Ring and Ball: 58°C.

The person skilled in the art will clearly understand from that which has been set forth that the modification of commercially used bitumens- penetration 40/50, 60/70, 80/100-with different percentages of rubber powder also containing different percentages of aromatic oil opens up for the manufacturer an extraordinary range of possibilities for applying the most suitable, effective and durable binder in different sections of the road and in its different layers, with the subsequent saving in costs, which is very important in the public works sector.

Although an embodiment of the invention has been described and shown, it is evident that modifications comprised within the scope of the invention can be introduced therein, and the invention must not be considered as limited to said embodiment but only to the content of the following claims.

## Claims

1. A process for modifying bitumen with rubber powder from vehicle tires or other waste products, **characterized in that** it comprises the following steps:
a) mixing rubber powder with an aromatic oil at room temperature, in a proportion comprised between 98-60% of rubber powder and 2-40% of aromatic oil, until a homogeneous mixture is achieved, thereby obtaining a modified rubber powder; and
b) mixing the modified rubber powder resulting from the previous step with bitumen with stirring or by means of a mill or another mixing element, in a proportion comprised between 5-20% of modified rubber powder and 95-80% of bitumen, at a temperature comprised between 140-200°C for a time comprised between 5-40 minutes.

2. A process for modifying bitumen with rubber powder according to claim 1, **characterized in that** a proportion of aromatic oil of 3-25% is used in step a).

3. A process for modifying bitumen with rubber powder according to any of the previous claims, **characterized in that** the temperature of step b) is comprised between 150-170°C.

4. A process for modifying bitumen with rubber powder according to any of the previous claims, **characterized in that** the process time of step b) is comprised between 12-15 minutes.

## Patentansprüche

1. Verfahren zur Modifizierung von Bitumen mit Kautschukpulver aus Fahrzeugreifen oder anderen Abfallprodukten, **dadurch gekennzeichnet, daß** man:
a) Kautschukpulver bei Raumtemperatur mit einem aromatischen Öl in einem Anteil zwischen 98-60% Kautschukpulver und 2-40% aromatischem Öl mischt, bis sich eine homogene Mischung ergibt, wodurch man ein modifiziertes Kautschukpulver erhält; und
b) das modifizierte Kautschukpulver aus dem vorhergehenden Schritt unter Rühren oder mit Hilfe einer Mühle oder eines anderen Mischelements bei einer Temperatur zwischen 140-200°C über einen Zeitraum zwischen 5-40 Minuten mit Bitumen in einem Anteil zwischen 5-20% modifiziertem Kautschukpulver und 95-80% Bitumen mischt.

2. Verfahren zur Modifizierung von Bitumen mit Kautschukpulver nach Anspruch 1, **dadurch gekennzeichnet, daß** man in Schritt a) einen Anteil an aromatischem Öl von 3-25% verwendet.

3. Verfahren zur Modifizierung von Bitumen mit Kautschukpulver nach einem der vorhergehenden Ansprüche, **dadurch gekennzeichnet, daß** die Temperatur von Schritt b) zwischen 150-170°C liegt.

4. Verfahren zur Modifizierung von Bitumen mit Kautschukpulver nach einem der vorhergehenden Ansprüche, **dadurch gekennzeichnet, daß** die Verarbeitungszeit von Schritt b) zwischen 12-15 Minuten liegt.

## Revendications

1. Procédé de modification du bitume avec de la poudre de caoutchouc de pneus de véhicule ou d'autres produits de rebut, **caractérisé en ce qu'**il comprend les étapes suivantes :
a) le mélangeage d'une poudre de caoutchouc avec une huile aromatique à la température ambiante, en une proportion comprise entre 98 et 60 % de poudre de caoutchouc et de 2 à 40 % d'huile aromatique, jusqu'à ce que l'on obtienne un mélange homogène, conduisant ainsi à une poudre de caoutchouc modifiée ; et
b) le mélangeage de la poudre de caoutchouc modifiée résultant de l'étape précédente avec du bitume en agitant ou au moins d'un broyeur ou d'un autre élément mélangeur, en une proportion comprise entre 5 et 20 % de poudre de caoutchouc modifiée et de 95 à 80 % de bitume, à une température comprise entre 140 et 200°C pendant une période comprise entre 5 et 40 minutes.

2. Procédé de modification du bitume avec une poudre de caoutchouc selon la revendication 1, **caractérisé en ce qu'**une proportion d'huile aromatique de 3 à 25 % est utilisée dans l'étape a).

3. Procédé de modification du bitume avec une poudre de caoutchouc selon l'une quelconque des revendications précédentes, **caractérisé en ce que** la température de l'étape b) est comprise entre 150 et 170°C.

4. Procédé de modification du bitume avec une poudre de caoutchouc selon l'une quelconque des revendications précédentes, **caractérisé en ce que** la période de traitement de l'étape b) est comprise entre 12 et 15 minutes.
